# EUROPEAN PATENT SPECIFICATION

(11) **EP 3 374 631 B1**
(45) Date of publication and mention of the grant of the patent: **29.09.2021**
(21) Application number: 16794625.0
(22) Date of filing: 11.11.2016
(51) Int. Cl.: F03D 17/00, F03D 1/06, H01Q 17/00

(54) **A DEFLECTION MONITORING SYSTEM FOR A WIND TURBINE BLADE**
ABLENKUNGSÜBERWACHUNGSSYSTEM FÜR EINE WINDTURBINENSCHAUFEL
SYSTÈME DE SURVEILLANCE DE DÉVIATION POUR UNE PALE D'ÉOLIENNE

(30) Priority: 11.11.2015 EP 15194068
(43) Date of publication of application: 19.09.2018
(73) Proprietor: LM WP Patent Holding A/S, 6000 Kolding (DK)
(72) Inventor: ZHANG, Shuai, 9200 Aalborg SV (DK); FRØLUND PEDERSEN, Gert, 9280 Storvorde (DK); HANSEN, Lars Bo, 6534 Agerskov (DK)
(74) Representative: COPA Copenhagen Patents
(86) International application number: PCT/EP2016/077397
(87) International publication number: WO 2017/081230

(56) References cited:
- WO-A2-2014/027032
- RODOLFO ARANEO: "Toward an effective absorber for damping resonances in shielded enclosures", ELECTROMAGNETIC COMPATIBILITY (EMC EUROPE), 2012 INTERNATIONAL SYMPOSIUM ON, IEEE, 17 September 2012 (2012-09-17), pages 1-6, XP032292378, DOI: 10.1109/EMCEUROPE.2012.6396687 ISBN: 978-1-4673-0718-5

## Description

### Field of the Invention

The present invention relates to a system for monitoring deflection of a wind turbine blade and to a blade having such system.

### Background of the Invention

Modern wind turbine designs seek to incorporate various blade monitoring systems, in order to provide for reliable and controlled operation of the wind turbine. Such monitoring systems can include blade deflection monitoring systems, which are used to provide an indication of wind turbine blade deflection or flexing during turbine operation. This information can be used to monitor for the risk of a future tower strike by the wind turbine blades, and to perform appropriate controller actions, e.g. blade pitching or turbine braking to minimize or eliminate such risk.

An example of such a deflection monitoring system is provided in US Patent No. 7,883,316, which describes a deflection monitoring system utilising a wireless communication network, operable to detect the position of various points along the length of the blade, and to determine blade bending from this information.

WO 2014/027032 suggests the use of external transceivers mounted at the root end of the wind turbine blade in communication with transceivers mounted at the tip end of the blade. Based on, for example, radio communication, measures the distance between the transceivers is measured. Positioning of the transceivers is optimized with respect to path loss between the devices.

US 2010/021298 discloses a wireless deflection monitoring system comprising a nacelle communication device.

WO 2009/143848 discloses an optical monitoring system.

However, it has been found that such wireless monitoring systems are vulnerable to various operational factors that may interfere with - and obscure the communication signal, for example, signal reflections, multipath effects, signal attenuation caused by passing through layers of different materials, etc., thereby reducing the precision and effectiveness of the monitoring system.

It is an object of the invention to provide an improved blade deflection monitoring system which is less susceptible to the above-described factors.

### Summary of the Invention

Accordingly, there is provided a wind turbine blade according to claim 1 comprising an airfoil profile body
having a pressure side and a suction side, and a leading edge and a trailing edge with a chord length extending there between, the blade having a tip end and a root end, the wind turbine blade further comprising:
   at least one tip communication device located towards said tip end,
   at least one root communication device located towards said root end, said at least one root communication device being in wireless radio communication with said at least one tip communication device via a wireless communication path, to monitor the distance between said at least one tip communication device and said at least one root communication device to determine a movement of said at least one tip communication device relative to said at least one root communication device indicative of a blade deflection, wherein
said at least one tip communication device is provided internally in the airfoil profile body, and
wherein at least one radio wave absorbing material is arranged internally in the airfoil profile body and in said wireless communication path.

Through monitoring for changes in the distance between communications devices provided towards the root and tip ends of the blade, the deflection of the wind turbine blade can be determined. This information can then be used to provide for improved wind turbine control, e.g. in the event that a blade deflection may lead to a tower strike, emergency pitching of the wind turbine blade may be carried out.

The communication between the tip- and root devices may preferably be achieved using Ultra Wide Band (=UWB) radio signals. In an embodiment of the invention a UWB pulse signal is transmitted from the at least one tip communication device and received by the at least one root communication device. The distance between the tip- and root devices may then be determined by comparing the rising edges of a transmitted pulse and a corresponding received first pulse, based on the time-of-flight of the pulse. Trilateration and or triangulation may be used to determine the tip position,

Radio-wave absorbing material refers herein to a material that enables absorption of radio waves so as to reduce the effect of multipath components and reflections of a radio signal transmitted on the communication path between the transmitter and the receiver. A material's absorbency at a given frequency of radio wave depends upon its composition and properties. Examples of radio-wave absorbing material according to the present disclosure include materials with a property, such as permeability and/or a permittivity that causes multipath components of a radio wave signal to be reduced by at least 50% when compared to providing no radio wave absorbing material, preferably by at least 70%.

By positioning a radio wave absorbing material internally in the airfoil profile body and in the wireless communication path between the at least one root communication device and the at least one tip communication device provided internally in the airfoil body an improved signal quality for the communication link between the devices is obtained, and accordingly provides for an improved blade deflection detection system. It has surprisingly been found that it is possible to effectively reduce the amount of multipath signals by arranging radio wave absorbing material in the wireless communication path between the at least one root communication device and the at least one tip communication device without obscuring the desired signal necessary to determine the distance between the at least one tip communication device and the at least one root communication device.

Surprisingly the attenuation of the total signal by the radio wave absorbing material is more than compensated for by improving pulse fidelity at the receiving end, significantly improving the quality of the signal with respect to the desired distance measurement.

Furthermore, the positioning of the root and tip devices on the blade itself ensures that the communication path between the devices is maintained, regardless of blade pitch or rotation, or turbine yaw movements. By providing the devices in the same pitching co-ordinate system, this allows for a considerable simplification of the calculations required for system operation, when compared with alternative systems having a first device mounted to a blade and a second device mounted to a rotor hub or to a turbine nacelle.

Furthermore, the positioning of the at least one tip communications device internally in the airfoil profile body, for example on a blade beam, spar or web, has several advantages:
Devices mounted externally on the blade would inevitable influence aerodynamics towards the tip end and very likely create noise during operation of the wind turbine which is highly undesirable, especially near people's homes.

Also, the external environment around the tip end of the blade may be highly erosive due to the high speeds of the tip through the air which imposes a risk of damaging the tip communication device(s) if externally mounted. This damage could happen over time or suddenly in situation of harsh wind conditions which is exactly the situation, where the deflection measurement is needed the most to prevent tower strikes.

It has been found that by mounting the tip communication device(s) internally in the airfoil body, thereby protecting the device(s) from the external environment, still makes possible good determination of the tip position, if combined with a radio wave absorbing material which can partly "clean" the communication signal for undesired components.

It should be noted that with an internally mounted tip communication device it turns out that the multipath components are much stronger when compared to an externally mounted device.

Experiments have shown that such multipath components originating e.g. from reflections form the walls of the partly hollow airfoil body, guided pulses within the partly hollow airfoil body, and surface waves propagating along the blade surface may be attenuated sufficiently by radio wave absorbing material arranged in the communication path within the blade to allow for distance measurements with adequate precision to determine blade deflection based on the distance measurement. This is surprising, since the radio signal on the communication path between the tip- and root communication devices inevitably has to travel through different materials such as laminate layers, when the at least one tip communication device is arranged internally in the blade near the tip regardless of the precise mounting location of the at least one root communication device and a considerably flawed signal would normally be expected, making the measurement less precise.

Accordingly, with an internally mounted tip communication device the radio wave absorbing material arranged in the communication path between tip- and root devices may effectively suppress multipath components, thereby improving the wave front fidelity in a time-domain pulse-field distribution without distorting the wave front fidelity when the blade is severely deflected.

In the invention said radio wave absorbing material is arranged between the at least one tip communication device and the at least one root communication device at a distance from the tip communication device of between 0.2 - 3.0 m, preferably of between 0.5 - 2 m.

It has been shown that the most efficient attenuation of unwanted signal components may be achieved by arranging the radio wave absorbing material in the communication path at a relatively short distance from the tip communication device when compared to the total length of the communication path, which is close to the length of the blade.

When the tip communication device transmits an UWB pulse, a part of the UWB pulse is escaping the partly hollow airfoil profile body through the laminate making up the shell of the wind turbine blade close to the tip communication device and prior to reaching the radio absorbing material.

Pulse fidelity at the receiving end (the at least one root communication device) of the first pulse is greatly enhanced if multipath components are suppressed close to the source of the pulse. Reflected parts of the signal and guided signals are thus attenuated before they can escape the airfoil profile body and interfere with the signal part received as the first pulse.

According to preferred embodiments of the invention the distance between the radio wave absorbing material and said at least one tip communication device is selected such that multipath components of a radio wave signal are suppressed by at least 50% when compared to providing no radio wave absorbing material, preferably by at least 60% or at least 70%.

In further embodiments of the invention said radio wave absorbing material is arranged in one or more cavities in the airfoil profile body at a distance from the tip communication device and between said at least one tip communication device and said at least one root communication to partly or fully block the communication path in a first cavity defined by the free space between a leading edge shear web and a first interior surface of the airfoil profile body facing the leading edge, to partly or fully block the communication path in a second cavity defined by the free space between said leading edge shear web, a trailing edge shear web and a second interior surface of the airfoil profile body and/or to partly or fully block the communication path in a third cavity defined by the free space between said trailing edge shear web and a third interior surface of the airfoil profile body facing the trailing edge.

It may be practical and efficient to insert radio absorbing material in the cavities within the airfoil profile body, where the at least one tip communication device is arranged.

In one embodiment the at least one tip communication device is mounted on the shear web facing the leading edge of the blade, and accordingly the radio wave absorbing material is arranged, for example in a bulkhead-like fashion to seal off the hollow space between the leading edge shear web and the blade shell at a position in the communication path.

The at least one tip communication device may also be mounted at a position between the trailing edge shear web and the leading edge shear web and the radio wave absorbing material may then be arranged to seal off the hollow space between the shear webs.

Alternatively or supplementary, a tip communication device may also be mounted at a position on the trailing edge shear web and facing the trailing edge and the radio wave absorbing material may then be arranged to seal off the hollow space between the trailing edge shear web and the blade shell.

Preferably, the radio wave absorbing material is arranged to completely seal off or block the hollow space in which the tip communication device is arranged, the radio wave absorbing material having a certain thickness along the longitudinal direction of the blade. Thus the radio wave absorbing material is arranged like a small bulkhead or small bulkheads towards the tip end of the blade.

The radio wave absorbing material may also not completely seal off the hollow space(s) as long as the improvement of the signal quality is sufficient. For example, the radio wave absorbing material may be provided with a suitable shape and mounted on one or more brackets attached to a shear web.

According to further embodiments of the invention said radio wave absorbing material has a thickness in the longitudinal direction of the blade of 5 - 300 mm, preferably of 20 - 200 mm, such as 50 - 150 mm.

The radio wave absorbing material may have a certain thickness, primarily determined by absorbing efficiency and the dependence of signal quality received at the root communication device(s) on the thickness of the radio wave absorbing material. Suppression of surface waves is somewhat dependent on the thickness of the radio wave absorbing material which is in favour of a thick absorber. At the same time, when the radio wave absorbing material is conductive, a thick absorbing material may be more susceptible for damage when lightning strikes.

According to embodiments of the invention said radio wave absorbing material is arranged as a panel comprising one or more sheets of one or more radio absorbing materials.

It may be desirable to provide a radio wave absorbing panel comprising layers of radio wave absorbing material(s).

Such panels may be designed to have a suitable shape for closing the signal passage directly through air in the communication path within the airfoil profile body. Such panels may be glued to the inner surface of the blade shell and/or a shear web.

The surface of the panel facing the tip communication device(s) may be wedge shaped or have a pyramidal structure. In some preferred embodiments, the surface is a flat surface.

One or more of such panels may be arranged in the communication path within the airfoil.

In an embodiment of the invention said one or more sheets comprise polymeric foam. Foam materials may have radio wave absorbing properties and at the same time be light weight which is important if to be used in a wind turbine blade.

According to embodiments of the invention said polymeric foam is selected from the group consisting of PUR, PS, PP, PE, PVC and combinations thereof.

According to further embodiments of the invention said panel comprises an outer material, partly or fully encapsulating said sheets of one or more radio absorbing materials, said outer material being selected from the group consisting of PTFE, PP, PE, PC, PS, ABS, PBT, natural rubber, synthetic rubber and combinations thereof.

In an embodiment of the invention said radio wave absorbing material is arranged as a passive device comprising interspaced metal plates.

This design of radio wave absorbing material may be easier to integrate with the lightning protection system.

Furthermore, multipath suppression of radio signals may be achieved without altering the curvature of the external blade surface.

In an embodiment of the invention said interspaced metal plates are copper plates.

In an embodiment of the invention, the distance between said interspaced metal plates is in the range of 1-10 cm, preferably 2 - 8 cm, such as 3 - 5 cm.

For integration with the lightning protection system of the wind turbine blade, the interspaced metal plates may be connected by, for example, a copper wire.

In an embodiment of the invention the number of said interspaced metal plates is between 2 and 20, such as between 5 and 15.

According to embodiments of the invention said radio wave absorbing material comprises carbon.

The foam material may further comprise conductive material, preferably carbon, to enhance radio wave absorbing ability.

In embodiments, where the radio wave absorbing material comprises conductive material, it may be particularly important to encapsulate the radio wave absorbing material in a non-conductive material to prevent any damage in the event of lightning striking the blade.

Alternatively or supplementary, the radio wave absorbing material may be electrically connected to the lightning protection system of the wind turbine blade to obtain potential equalization.

In a further embodiment of the invention said at least one tip communication device comprises an antenna transmitting a narrow time-domain pulse from a pulse generator, and said at least one root communication device comprises an antenna receiving said narrow time-domain pulse.

According to embodiments of the invention said at least one tip communication device is located between 0.5 and 5 m from the tip end of the airfoil profile body, preferably between 2 - 4 m form the tip end of the airfoil profile body.

It is desirable to place the tip communication device close to the tip to accurately assess the tip position and the actual deflection. Since the space within the airfoil profile body becomes more and more limited towards the tip end, the tip communication device may be positioned somewhat away from the tip end, taking space considerations into account.

In a further embodiment of the invention said at least one root communication device is arranged externally on the airfoil profile body.

Because the root portion of a wind turbine blade contributes very little or not at all to the aerodynamic performance of the blade due to its usually circular geometry, performance of the blade in terms of energy production is not affected significantly by placing the root communication device(s) externally on the airfoil profile body.

In a preferred embodiment, two root communication devices are mounted on brackets externally on the root section of the airfoil profile body.

The invention also relates to a wind turbine having at least one wind turbine blade as described herein.

Such wind turbine may be controlled to avoid tower strikes based on the position data provided by the blade deflection monitoring system.

In an embodiment of the invention the wind turbine further comprising a pitch control system operable to adjust the pitch of at least one wind turbine blade of said wind turbine, wherein the input to said pitch control system is at least partially based on the determined movement of said at least one tip communication device relative to said at least one root communication device indicative of a blade deflection.

The invention further relates to a blade deflection monitoring system according to claim 14 for installation
on a wind turbine blade, the wind turbine blade comprising an airfoil profile body having a pressure side and a suction side, and a leading edge and a trailing edge with a chord length extending there between, the blade having a tip end and a root end, the monitoring system comprising:
   at least one tip communication device for installation towards the tip end of a wind turbine blade,
   at least one root communication device for installation towards the root end of a wind turbine blade, and
   a controller to operate said communication devices in wireless radio communication to monitor the distance between said at least one tip communication device and said at least one root communication device when installed on a wind turbine blade to determine a movement of said at least one tip communication device relative to said at least one root communication device indicative of a blade deflection, wherein
   said at least one tip communication device is provided internally in the airfoil profile body, and
wherein at least one radio wave absorbing material is arranged internally in the airfoil profile body and in said wireless communication path.

Preferably, the system is configured such that the communication signal propagates along either the leading or trailing edge of the blade, and flapwise bending of blade results in maximum change in signal propagation time.

Preferably, said at least one root communication device is located towards the leading edge or trailing edge of said wind turbine blade. Preferably, said at least one tip communication device is located towards the leading edge or trailing edge of said wind turbine blade. In one aspect on the invention, said at least one root communication device and said at least one tip communication device are located towards the same side of said wind turbine blade.

As any wind turbine blade will have a maximum deflection level that the blade is certified for, this can be seen as a worst-case deflection scenario. Accordingly, by spacing the at least one root communication device at a certain distance from the surface of the blade, for example, by mounting the root communication device on a bracket, an acceptable signal communication level can be ensured for all predicted deflection levels of the blade.

It will be understood that the devices may be provided at the blade leading or trailing edges, or adjacent the leading or trailing edge.

Preferably, the wind turbine blade comprises a first root communication device provided on a first bracket and a second root communication device provided on a second bracket, the first and second root communication devices provided towards the leading or trailing edge wherein said first root communication device is located on the pressure side of said leading or trailing edge and said second root communication device is located on the suction side of said leading or trailing edge.

By placing the root devices on either side of the leading or trailing edge, the root devices can be provided at definable positions which allow for trilateration and/or triangulation distance or location measurements.

Preferably, said at least one root communication device is operable to determine the location of said at least one tip communication device using trilateration. Additionally or alternatively, said at least one root communication device is operable to determine the location of said at least one tip communication device using triangulation. Preferably, said at least one tip communication device and said at least one root communication device are ultra-wideband (UWB) location tracking and/or communication devices, and wherein said communication path is a UWB signal communication path.

UWB communication allows for a range or distance measurement to be performed between a transmitter and a receiver device, in a low-power application, minimizing the effects of outside interference.

It will be understood that said at least one tip communication device and/or said at least one root communication device is selected from one of the following: a receiver, a transmitter, a receiver-transmitter circuit, or a transceiver.

Additionally or alternatively, the wind turbine blade further comprises a controller, said controller operable to control a signal transmitted along said wireless communication path between said at least one tip communication device and said at least one root communication device, wherein said controller is further operable to adjust the signal gain of said signal based on at least one of the following: a measured blade deflection level, a predicted blade deflection level, a signal strength level of a signal received via said communication path.

Such an adaptive control of the communications link between the root and tip devices provides for improved system operation, and reduced operational power requirements due to optimized signal levels.

Preferably, the wind turbine comprises a pitch control system operable to adjust the pitch of at least one wind turbine blade of said wind turbine, wherein the input to said pitch control system is at least partially based on the determined movement of said at least one tip communication device relative to said at least one root communication device indicative of a blade deflection.

It will be understood that the wind turbine may be provided with a supplementary safety system, which is operable to ensure turbine safety, and prevent tower strikes, etc., in the event of failure of the blade deflection measurement system.

### Description of the Invention

Embodiments of the invention will now be described, by way of example only, with reference to the accompanying drawings, in which:
Fig. 1 shows a wind turbine;
Fig. 2 shows a schematic view of a wind turbine blade;
Fig. 3 shows a schematic view of an airfoil profile of the blade of Fig. 2;
Fig. 4 illustrates a wind turbine blade having a blade deflection monitoring system according to an embodiment of the invention;
Fig. 5 is a cross-sectional view of an embodiment of the blade of Fig. 4 taken at the root end of the blade;
Fig. 6a shows the interior of the airfoil profile body at the tip end showing a tip communication device and radio wave absorbing material arranged according to an embodiment of the invention;
Fig. 6b shows radio wave absorbing material arranged as a panel according to an embodiment of the invention.
Fig. 7 shows a schematic view of radio signal propagation from a tip communication device arranged in the interior of the blade according to the invention.
Fig. 8 shows a schematic drawing of the radio wave absorbing material in the form of interspaced metal plates arranged at a distance for the tip communication device.

It will be understood that the attached drawings are illustrative only, and are not provided to scale.

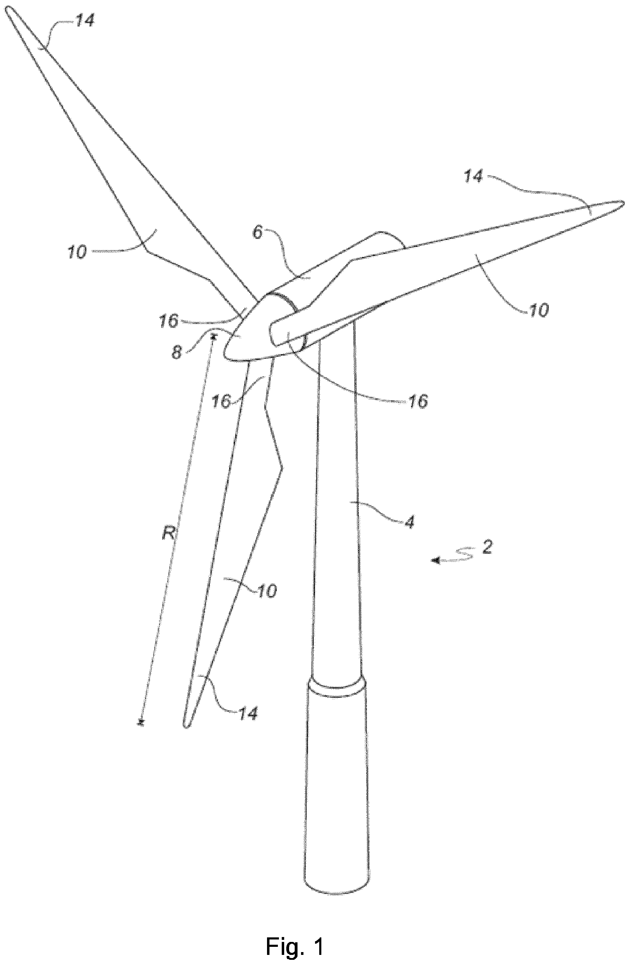

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

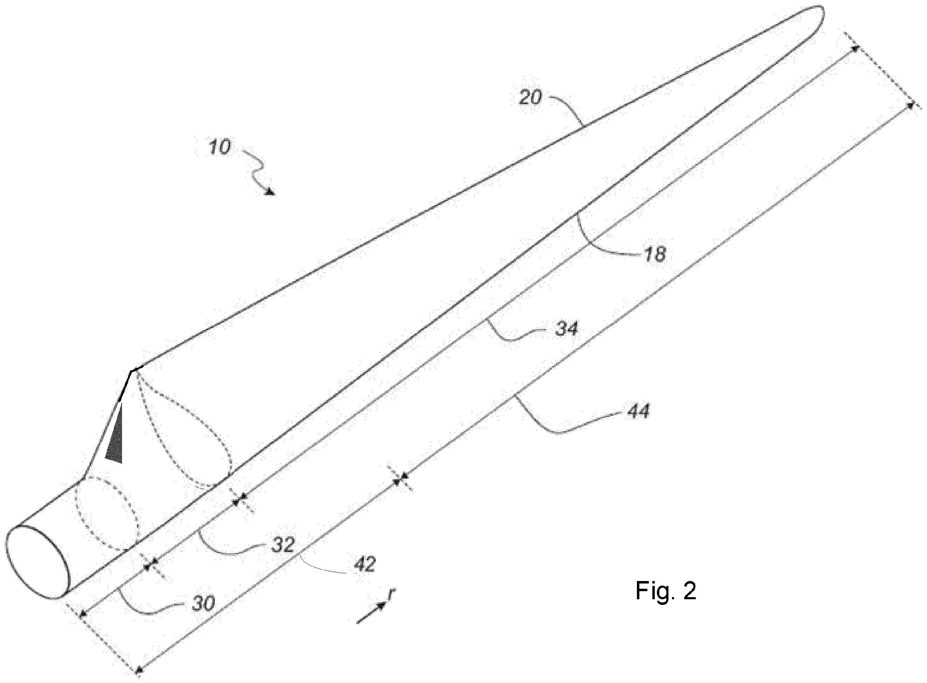

Fig. 2 shows a schematic view of a first embodiment of a wind turbine blade 10 which may be used according to an embodiment of the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 is typically constant along the entire root area 30. The transition region 32 has a transitional profile 42 gradually changing from the circular or elliptical shape of the root region 30 to the airfoil profile 50 of the airfoil region 34. The chord length of the transition region 32 typically increases substantially linearly with increasing distance r from the hub.

The airfoil region 34 has an airfoil profile 50 with a chord extending between the leading edge 18 and the trailing edge 20 of the blade 10. The width of the chord decreases with increasing distance r from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

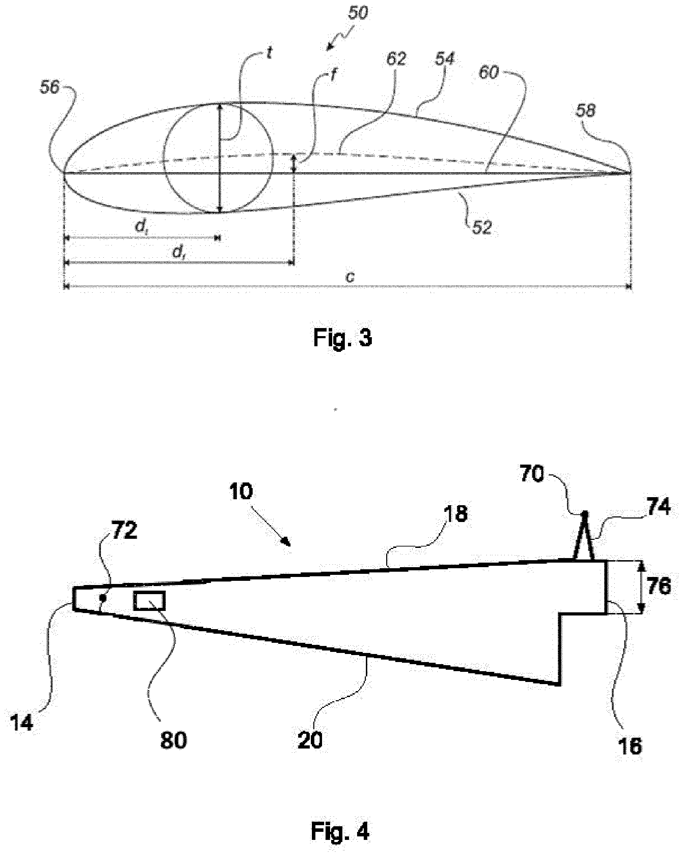

Fig. 3 shows a schematic view of an airfoil profile 50 of a typical blade of a wind turbine depicted with the various parameters which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber and lower camber, which are defined as the distances from the chord 60 and the suction side 54 and pressure side 52, respectively.

Airfoil profiles are often characterised by the following parameters: the chord length c, the maximum camber f, the position df of the maximum camber f, the maximum airfoil thickness t, which is the largest diameter of the inscribed circles along the median camber line 62, the position dt of the maximum thickness t, and a nose radius (not shown). These parameters are typically defined as ratios to the chord length c.

Wind turbine blades are generally formed from fibre-reinforced plastics material, i.e. glass fibres and/or carbon fibres which are arranged in a mould and cured with a resin to form a solid structure. Modern wind turbine blades can often be in excess of 30-40 metres in length, having blade root diameters of several metres.

With reference to Fig. 4, a wind turbine blade 10 is shown having a blade deflection monitoring system according to an embodiment of the invention. The deflection monitoring system comprises at least one root end wireless communication device 70 arranged at the exterior side of the hollow blade body in the root region and at least one tip end wireless communication device 72 arranged in the interior side of the blade body. The tip end wireless communication device may for example be mounted on a leading edge web in a typical blade having a box spar design with a leading edge - and trailing edge shear web. The respective wireless devices 70,72 are operable to establish a communication link, and perform a range measurement between the different devices 70,72. In the communication path between the root end wireless communication device 70 and the tip and wireless communication device 72 a radio wave absorbing material 80 is arranged. Typically the radio wave absorbing material 80 may be arranged to effectively absorb the radio waves within the hollow blade body between the leading edge web and the blade shell. This implies that the circumferential shape of the absorber may be adapted to the circumferential contour of the hollow space between the leading edge web and the shell to fully block the communication path by attaching the absorber to the shell and web along its circumference, for example by use of adhesive or mechanical attaching means such as bolts, brackets and the like. The blade 10 may further comprise a controller (not shown) which is operable to receive the range measurement details from the communication devices in order to determine the measured blade deflection.

In one aspect, the root and tip devices 70,72 are located at the leading edge 18 of the wind turbine blade 10. As a communication device mounted on the leading or trailing edge 18,20 is less susceptible to flapwise bending than a sensor mounted on the pressure or suction sides of the blade 10, and as the magnitude of the edgewise bending of the blade 10 is understood to be significantly less than that of flapwise bending, this provides for improved reliability of the communications link between the root and tip devices 70,72, as the communications path between devices is less likely to be disturbed by bending of the blade 10.

Additionally or alternatively, the root and tip devices 70,72 may be mounted at the blade trailing edge 20.

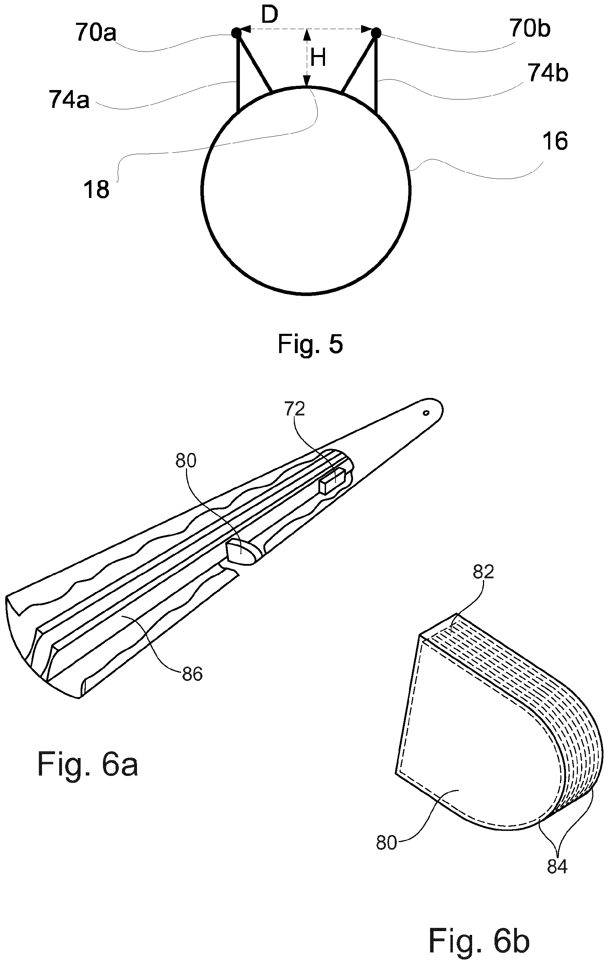

In a preferred embodiment of the invention, preferably first and second root end communication devices are provided 70a, 70b. Fig. 5 illustrates a cross-sectional view of the first and second root end communication devices 70a, 70b located at the substantially circular root end 16 of the blade 10. The root devices 70a, 70b are provided on the distal ends of respective first and second brackets 74a, 74b.

With reference to Fig. 5, the height of the brackets 74a, 74b is selected such that the root devices 70a, 70b provided on the distal ends of the respective brackets 74a,74b are located at a height H above the external surface of the wind turbine blade. Furthermore, the brackets 74a, 74b are positioned such that the respective root devices 70a, 70b are separated by a distance D, preferably above the leading edge 18 of the blade 10.

As the deflection characteristics of the wind turbine blade 10 may be determined from the details of the blade construction, and additionally as each wind turbine blade 10 has a maximum certified deflection level defining an allowable range of blade deflection shapes, it is possible to configure the arrangement of the blade deflection monitoring system of the invention based on the wind turbine blade in question.

It may be advantageous to suppress signal reflections from the external surface of the blade. In particular when the blade is deflected or in case of a non-deflected pre-bent blade, signals from the tip communication device may be reflected from the blade and obscure the signals received by the root communication device.

Thus, the external blade surface may be made less reflective at positions close to the line of sight between the root-and tip devices through surface treatment in the form of radio wave absorbing coatings or otherwise providing the surface with a scattering effect, for example by roughening the surface and/or provide small indentions and protrusions on the surface.

In this context the line of sight is to be understood as the direct line between tip a tip communication device and a root communication device passing through any obstacles located in the way, for example the laminate of the airfoil shell body.

Fig. 6a illustrates the tip end of the blade having mounted tip communication device 72 and radio wave absorbing material 80. In the shown embodiment, the tip communication device 72 is mounted on a leading edge shear web 86 and facing the leading edge and the absorbing material 80 is arranged as a bulkhead-like panel, substantially sealing off the hollow space between the leading edge shear web and the blade shell at a position in the communication path.

In other embodiments, the tip communication device may be mounted between the shear webs or on the trailing edge shear web and facing the trailing edge. Also, radio wave absorbing material 80 may be arranged between the shear webs or in the hollow space between the trailing edge shear web and the blade shell,

Fig. 6b shows the radio wave absorbing material 80 arranged in a panel in more detail.

The panel comprises sheets or layers 82 of radio wave absorbing material sandwiched between panels 84 to provide a radio wave absorbing bulkhead-like panel being shaped to fit the hollow space between the shear web and the blade shell at a position in the communication path to seal off/block the hollow space between the shear web and the blade shell at a position in the communication path.

The layers 82 may, for example, be made of polyurethane foam material comprising carbon, and the panels 84 may, for example, be made of PTFE.

It should be noted that the radio wave absorbing material can also be a block of material that is not layered but formed from one piece. It should further be noted that the panels 84 may be partly or fully encapsulate the radio wave absorbing material and that the radio wave absorbing material may also be provided without panels 84 in some embodiments.

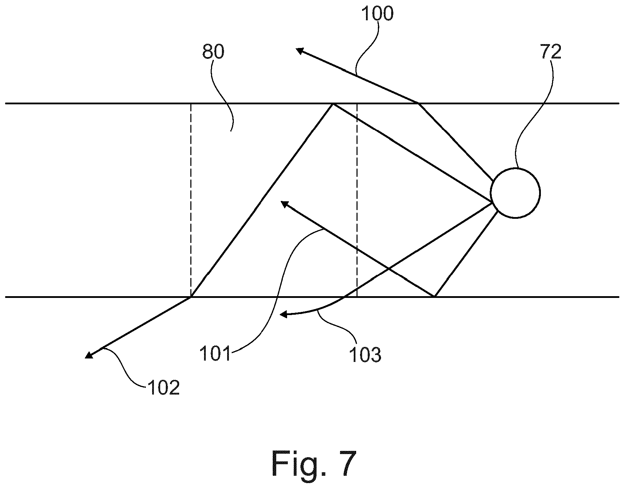

Fig.7 shows a schematic drawing of tip communication device 72 sending radio signals towards one or more root communication devices (not shown). Radio absorbing material 80 is indicated with dashed lines. Diffracted pulse 100 will travel towards the root while guided pulse 101 and multipath component 102 will be at least partly suppressed by absorbing material 80.

Surface wave 103 will also be less pronounced having absorber material 80 in place. The positioning of radio wave absorbing material 80 relative to tip communication device 72 has to be optimized with respect to suppressing pulse components 101, 102 and 103 while still allowing sufficient energy in the form of component 100 to reach the root to obtain precise measurements.

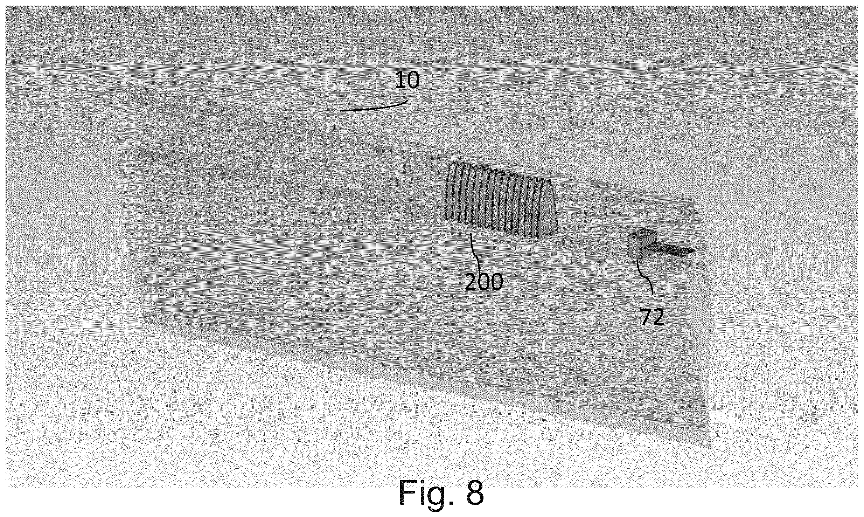

Fig. 8 shows a schematic drawing of the radio wave absorbing material 80 in the form of interspaced metal plates 200 arranged at a distance for the tip end wireless communication device 72.

In a further aspect, preferably the root devices are located within 0-25% of the length of the blade from the root end of the blade. Preferably, the root devices are located within 10 metres along the longitudinal direction of the blade from the root end of the blade.

It will be understood that said at least one tip communication device and/or said at least one root communication device is selected from one of the following: a receiver, a transmitter, a receiver-transmitter circuit, or a transceiver. It will further be understood that the at least one tip communication device may comprise an antenna provided towards said tip end, the antenna coupled to a receiver, transmitter, receiver-transmitter circuit, or transceiver device provided at a separate location, e.g. towards the blade root end.

Preferably, the communications link is using Ultra Wide Band (UWB) technology, but it will be understood that any other suitable radio-based communication and ranging technology may be used.

Further features of the system of the invention may include the use of specialized antenna designs such as directional or circular polarized antennas for the root or tip devices, in order to further improve the communications link between the devices, and/or the implementation of pulse shape detection techniques for received signals.

It will be understood that the blade deflection monitoring system of the invention may comprise any suitable control system for the efficient and effective operation of the system.

The invention provides a system to ensure accurate monitoring of blade deflection, having improved signal quality. The tip communication device is provided inside the hollow blade body, thereby protecting the device from harsh outdoor environment and eliminating any noise issues that may arise as a consequence of arranging such communication device on the exterior side of the blade at the tip end of the blade. A radio wave absorbing material is arranged inside the blade in the communication path between the tip communication device and the root communication device at a distance from the tip communication device to improve signal quality and effectively suppress unwanted signal components that may obscure the distance measurement and thereby, the measured deflection of the blade.

As a result of this configuration, the deflection monitoring system has relatively low power requirements, and provides improved reliability and signal quality compared to prior art wireless deflection monitoring systems.

The invention is not limited to the embodiments described herein, and may be modified or adapted without departing from the scope of the present invention as defined by the appended claims.

## Claims

1. A wind turbine blade (10) comprising an airfoil profile body having a pressure side (52) and a suction side (54), and a leading edge (18) and a trailing edge (20) with a chord length (60) extending there between, the blade having a tip end (14) and a root end (16), the wind turbine blade further comprising:
at least one tip communication device (72) located towards said tip end,
at least one root communication device (70) located towards said root end, said at least one root communication device being in wireless radio communication with said at least one tip communication device via a wireless communication path, to monitor the distance between said at least one tip communication device and said at least one root communication device to determine a movement of said at least one tip communication device relative to said at least one root communication device indicative of a blade deflection, wherein
said at least one tip communication device is provided internally in the airfoil profile body, and
wherein at least one radio wave absorbing material (80) is arranged internally in the airfoil profile body and in said wireless communication path,
**characterized in that** said radio wave absorbing material (80) is arranged between the at least one tip communication device (72) and the at least one root communication device (70) at a distance from the tip communication device of between 0.2 - 3.0 m, preferably of between 0.5 - 2 m.

2. A wind turbine blade according to claim 1,
wherein said radio wave absorbing material (80) is arranged in one or more cavities in the airfoil profile body at a distance from the tip communication device (72) and between said at least one tip communication device and said at least one root communication device (70) to partly or fully block the communication path in a first cavity defined by the free space between a leading edge shear web (86) and a first interior surface of the airfoil profile body facing the leading edge, to partly or fully block the communication path in a second cavity defined by the free space between said leading edge shear web, a trailing edge shear web and a second interior surface of the airfoil profile body and/or to partly or fully block the communication path in a third cavity defined by the free space between said trailing edge shear web and a third interior surface of the airfoil profile body facing the trailing edge.

3. A wind turbine blade according to any of the claims 1 - 2, wherein said radio wave absorbing material (80) has a thickness in the longitudinal direction of the blade of 5 - 300 mm, preferably of 20 - 200 mm, such as 50 - 150 mm.

4. A wind turbine blade according to any of the claims 1 - 3, wherein said radio wave absorbing material (80) is arranged as a panel comprising one or more sheets (82) of one or more radio absorbing materials, e.g.
wherein said one or more sheets (82) comprise polymeric foam,
optionally wherein said polymeric foam is selected from the group consisting of PUR, PS, PP, PE, PVC and combinations thereof.

5. A wind turbine blade according to claim 4, wherein said panel comprises an outer material (84), partly or fully encapsulating said sheets (82) of one or more radio absorbing materials, said outer material being selected from the group consisting of PTFE, PP, PE, PC, PS, ABS, PBT, natural rubber, synthetic rubber and combinations thereof.

6. A wind turbine blade according to any of the claims 1 - 5, wherein said radio wave absorbing material (80) comprises carbon.

7. A wind turbine blade according to any of the claims 1 - 4, wherein said radio wave absorbing material is arranged as a passive device comprising interspaced metal plates (200), e.g.
wherein said interspaced metal plates are copper plates.

8. A wind turbine blade according claim 7, wherein the distance between said interspaced metal plates is in the range of 1-10 cm, preferably 2 - 8 cm, such as 3 - 5 cm, and/or
wherein the number of said interspaced metal plates is between 2 and 20, such as between 5 and 15.

9. A wind turbine blade according to any of the claims 1 - 8,
wherein said at least one tip communication device (72) comprises an antenna transmitting a narrow time-domain pulse from a pulse generator, and said at least one root communication device (70) comprises an antenna receiving said narrow time-domain pulse.

10. A wind turbine blade (10) according to any of the claims 1 - 9,
wherein said at least one tip communication device (72) is located between 0.5 and 5 m from the tip end of the airfoil profile body, preferably between 2 - 4 m form the tip end of the airfoil profile body.

11. A wind turbine blade (10) according to any of the claims 1 - 10,
wherein said at least one root communication device (70) is arranged externally on the airfoil profile body.

12. A wind turbine (2) having at least one wind turbine blade (10) as claimed in any one of claims 1 - 11.

13. A wind turbine (2) as claimed in claim 12, further comprising a pitch control system operable to adjust the pitch of at least one wind turbine blade of said wind turbine, wherein the input to said pitch control system is at least partially based on the determined movement of said at least one tip communication device (72) relative to said at least one root communication device (70) indicative of a blade deflection.

14. A blade deflection monitoring system for installation on a wind turbine blade, the wind turbine blade comprising an airfoil profile body having a pressure side (52) and a suction side (54), and a leading edge (18) and a trailing edge (20) with a chord length (60) extending there between, the blade having a tip end (14) and a root end (16), the monitoring system comprising:
at least one tip communication device (72) for installation towards the tip end of a wind turbine blade (10),
at least one root communication device (70) for installation towards the root end of a wind turbine blade, and
a controller to operate said communication devices in wireless radio communication to monitor the distance between said at least one tip communication device and said at least one root communication device when installed on a wind turbine blade to determine a movement of said at least one tip communication device relative to said at least one root communication device indicative of a blade deflection, wherein
said at least one tip communication device is provided internally in the airfoil profile body, and
wherein at least one radio wave absorbing material (80) is arranged internally in the airfoil profile body and in said wireless communication path,
**characterized in that** said radio wave absorbing material (80) is arranged between the at least one tip communication device (72) and the at least one root communication device (70) at a distance from the tip communication device of between 0.2 - 3.0 m, preferably of between 0.5 - 2 m.

## Patentansprüche

1. Windkraftanlagenflügel (10), umfassend einen Tragflächenprofilkörper mit einer Druckseite (52) und einer Saugseite (54) sowie einer Eintrittskante (18) und einer Austrittskante (20) mit einer sich dazwischen erstreckenden Sehnenlänge (60), wobei der Flügel ein Spitzenende (14) und ein Wurzelende (16) aufweist, wobei der Windkraftanlagenflügel ferner Folgendes umfasst:
mindestens eine Spitzenkommunikationsvorrichtung (72), die zu dem Spitzenende hin liegt,
mindestens eine Wurzelkommunikationsvorrichtung (70), die zu dem Wurzelende hin liegt, wobei die mindestens eine Wurzelkommunikationsvorrichtung über einen drahtlosen Kommunikationsweg in drahtloser Funkverbindung mit der mindestens einen Spitzenkommunikationsvorrichtung steht, um den Abstand zwischen der mindestens einen Spitzenkommunikationsvorrichtung und der mindestens einen Wurzelkommunikationsvorrichtung zu überwachen, um eine eine Flügelauslenkung angebende Bewegung der mindestens einen Spitzenkommunikationsvorrichtung relativ zu der mindestens einen Wurzelkommunikationsvorrichtung zu bestimmen,
wobei
die mindestens eine Spitzenkommunikationsvorrichtung innen in dem Tragflächenprofilkörper bereitgestellt ist, und
wobei mindestens ein Funkwellen absorbierendes Material (80) innen in dem Tragflächenprofilkörper und in dem drahtlosen Kommunikationsweg angeordnet ist,
**dadurch gekennzeichnet, dass** das Funkwellen absorbierende Material (80) zwischen der mindestens einen Spitzenkommunikationsvorrichtung (72) und der mindestens einen Wurzelkommunikationsvorrichtung (70) in einem Abstand von der Spitzenkommunikationsvorrichtung von zwischen 0,2-3,0 m, vorzugsweise zwischen 0,5-2 m angeordnet ist.

2. Windkraftanlagenflügel nach Anspruch 1,
wobei das Funkwellen absorbierende Material (80) in einem oder mehreren Hohlräumen in dem Tragflächenprofilkörper in einem Abstand von der Spitzenkommunikationsvorrichtung (72) und zwischen der mindestens einen Spitzenkommunikationsvorrichtung und der mindestens einen Wurzelkommunikationsvorrichtung (70) angeordnet ist, um den Kommunikationsweg in einem ersten, von dem freien Raum zwischen einem Eintrittskanten-Schersteg (86) und einer ersten, der Eintrittskante zugewandten Innenoberfläche des Tragflächenprofilkörpers definierten Hohlraum ganz oder teilweise zu blockieren, um den Kommunikationsweg in einem zweiten, von dem freien Raum zwischen dem Eintrittskanten-Schersteg, einem Austrittskanten-Schersteg und einer zweiten Innenoberfläche des Tragflächenprofilkörpers definierten Hohlraum ganz oder teilweise zu blockieren, und/oder um den Kommunikationsweg in einem dritten, von dem freien Raum zwischen dem Austrittskanten-Schersteg und einer dritten, der Austrittskante zugewandten Innenoberfläche des Tragflächenprofilköpers definierten Hohlraum ganz oder teilweise zu blockieren.

3. Windkraftanlagenflügel nach einem der Ansprüche 1-2, wobei das Funkwellen absorbierende Material (80) eine Dicke in der Längsrichtung des Flügels von 5-300 mm, vorzugsweise von 20-200 mm, wie etwa 50-150 mm, aufweist.

4. Windkraftanlagenflügel nach einem der Ansprüche 1-3, wobei das Funkwellen absorbierende Material (80) als flaches Element angeordnet ist, das eine oder mehrere Lagen (82) aus einem oder mehreren Funk absorbierenden Materialien umfasst,
wobei z. B. die eine oder mehreren Lagen (82) Polymerschaumstoff umfassen,
wobei optional der Polymerschaumstoff aus der aus PUR, PS, PP, PE, PVC und Kombinationen davon bestehenden Gruppe ausgewählt ist.

5. Windkraftanlagenflügel nach Anspruch 4, wobei das flache Element ein Außenmaterial (84) umfasst, das die Lagen (82) aus einem oder mehreren Funk absorbierenden Materialien teilweise oder ganz einschließt, wobei das Außenmaterial aus der aus PTFE, PP, PE, PC, PS, ABS, PBT, Naturkautschuk, Kunstkautschuk und Kombinationen davon bestehenden Gruppe ausgewählt ist.

6. Windkraftanlagenflügel nach einem der Ansprüche 1-5, wobei das Funkwellen absorbierende Material (80) Kohlenstoff umfasst.

7. Windkraftanlagenflügel nach einem der Ansprüche 1-4, wobei das Funkwellen absorbierende Material als passive Vorrichtung angeordnet ist, die mit Zwischenräumen angeordnete Metallplatten (200) umfasst,
wobei es sich z. B. bei den mit Zwischenräumen angeordneten Metallplatten um Kupferplatten handelt.

8. Windkraftanlagenflügel nach Anspruch 7, wobei der Abstand zwischen den mit Zwischenräumen angeordneten Metallplatten im Bereich von 1-10 cm, vorzugsweise 2-8 cm, wie etwa 3-5 cm liegt, und/oder
wobei die Zahl der mit Zwischenräumen angeordneten Metallplatten zwischen 2 und 20, wie etwa zwischen 5 und 15, beträgt.

9. Windkraftanlagenflügel nach einem der Ansprüche 1-8,
wobei die mindestens eine Spitzenkommunikationsvorrichtung (72) eine einen schmalen Zeitbereichsimpuls von einem Impulsgenerator übertragende Antenne umfasst und die mindestens eine Wurzelkommunikationsvorrichtung (70) eine den schmalen Zeitbereichsimpuls empfangende Antenne umfasst.

10. Windkraftanlagenflügel (10) nach einem der Ansprüche 1-9,
wobei die mindestens eine Spitzenkommunikationsvorrichtung (72) zwischen 0,5 und 5 m von dem Spitzenende des Tragflächenprofilkörpers liegt, vorzugsweise zwischen 2-4 m von dem Spitzenende des Tragflächenprofilkörpers.

11. Windkraftanlagenflügel (10) nach einem der Ansprüche 1-10,
wobei die mindestens eine Wurzelkommunikationsvorrichtung (70) außen an dem Tragflächenprofilkörper angeordnet ist.

12. Windkraftanlage (2), die mindestens einen Windkraftanlagenflügel (10) nach einem der Ansprüche 1-11 umfasst.

13. Windkraftanlage (2) nach Anspruch 12, ferner umfassend ein Flügelwinkel-Verstellsystem, das wirksam ist, um den Flügelwinkel von mindestens einem Windkraftanlagenflügel der Windkraftanlage zu verstellen, wobei die Eingabe für das Flügelwinkel-Verstellsystem mindestens teilweise auf der bestimmten, eine Flügelauslenkung angebende Bewegung der mindestens einen Spitzenkommunikationsvorrichtung (72) relativ zu der mindestens einen Wurzelkommunikationsvorrichtung (70) basiert.

14. Flügelauslenkungs-Überwachungssystem zur Installation an einem Windkraftanlagenflügel, wobei der Windkraftanlagenflügel einen Tragflächenprofilkörper mit einer Druckseite (52) und einer Saugseite (54) sowie einer Eintrittskante (18) und einer Austrittskante (20) mit einer sich dazwischen erstreckenden Sehnenlänge (60) umfasst, wobei der Flügel ein Spitzenende (14) und ein Wurzelende (16) aufweist, wobei das Überwachungssystem Folgendes umfasst:
mindestens eine Spitzenkommunikationsvorrichtung (72) zur Installation zu dem Spitzenende eines Windkraftanlagenflügels (10) hin,
mindestens eine Wurzelkommunikationsvorrichtung (70) zur Installation zu dem Wurzelende eines Windkraftanlagenflügels hin, und
eine Steuerung zum Betreiben der Kommunikationsvorrichtungen in drahtloser Funkverbindung, um den Abstand zwischen der mindestens einen Spitzenkommunikationsvorrichtung und der mindestens einen Wurzelkommunikationsvorrichtung zu überwachen, wenn sie an einem Windkraftanlagenflügel installiert sind, um eine eine Flügelauslenkung angebende Bewegung zwischen der mindestens einen Spitzenkommunikationsvorrichtung relativ zu der mindestens einen Wurzelkommunikationsvorrichtung zu bestimmen, wobei die mindestens eine Spitzenkommunikationsvorrichtung innen in dem Tragflächenprofilkörper bereitgestellt ist, und
wobei mindestens ein Funkwellen absorbierendes Material (80) innen in dem Tragflächenprofilkörper und in dem drahtlosen Kommunikationsweg angeordnet ist,
**dadurch gekennzeichnet, dass** das Funkwellen absorbierende Material (80) zwischen der mindestens einen Spitzenkommunikationsvorrichtung (72) und der mindestens einen Wurzelkommunikationsvorrichtung (70) in einem Abstand von der Spitzenkommunikationsvorrichtung von zwischen 0,2-3,0 m, vorzugsweise zwischen 0,5-2 m angeordnet ist.

## Revendications

1. Pale d'éolienne (10) comportant un corps de profil aérodynamique ayant un côté en pression (52) et un côté en dépression (54), et un bord d'attaque (18) et un bord de fuite (20) avec une longueur de corde (60) s'étendant entre eux, la pale ayant une extrémité de bout (14) et une extrémité de pied (16), la pale d'éolienne comportant par ailleurs :
au moins un dispositif de communication de bout (72) situé vers ladite extrémité de bout,
au moins un dispositif de communication de pied (70) situé vers ladite extrémité de pied, ledit au moins un dispositif de communication de pied étant en radiocommunication sans fil avec ledit au moins un dispositif de communication de bout par le biais d'une voie de communication sans fil, pour surveiller la distance entre ledit au moins un dispositif de communication de bout et ledit au moins un dispositif de communication de pied pour déterminer un mouvement dudit au moins un dispositif de communication de bout par rapport audit au moins un dispositif de communication de pied indiquant une déviation de pale, dans laquelle
ledit au moins un dispositif de communication de bout est mis en œuvre de manière interne dans le corps de profil aérodynamique, et
dans laquelle au moins un matériau d'absorption d'ondes radioélectriques (80) est agencé de manière interne dans le corps de profil aérodynamique et dans ladite voie de communication sans fil,
**caractérisée en ce que** ledit matériau d'absorption d'ondes radioélectriques (80) est agencé entre ledit au moins un dispositif de communication de bout (72) et ledit au moins un dispositif de communication de pied (70) à une distance par rapport au dispositif de communication de bout d'entre 0,2 à 3,0 m, de préférence d'entre 0,5 à 2 m.

2. Pale d'éolienne selon la revendication 1,
dans laquelle ledit matériau d'absorption d'ondes radioélectriques (80) est agencé dans une ou plusieurs cavités dans le corps de profil aérodynamique à une distance par rapport au dispositif de communication de bout (72) et entre ledit au moins un dispositif de communication de bout et ledit au moins un dispositif de communication de pied (70) pour bloquer partiellement ou entièrement la voie de communication dans une première cavité définie par l'espace libre entre une âme de cisaillement de bord d'attaque (86) et une première surface intérieure du corps de profil aérodynamique selon une orientation vers le bord d'attaque, pour bloquer partiellement ou entièrement la voie de communication dans une deuxième cavité définie par l'espace libre entre ladite âme de cisaillement de bord d'attaque, une âme de cisaillement de bord de fuite et une deuxième surface intérieure du corps de profil aérodynamique et/ou pour bloquer partiellement ou entièrement la voie de communication dans une troisième cavité définie par l'espace libre entre ladite âme de cisaillement de bord de fuite et une troisième surface intérieure du corps de profil aérodynamique selon une orientation vers le bord de fuite.

3. Pale d'éolienne selon l'une quelconque des revendications 1 à 2, dans laquelle ledit matériau d'absorption d'ondes radioélectriques (80) a une épaisseur dans la direction longitudinale de la pale de 5 à 300 mm, de préférence de 20 à 200 mm, comme de 50 à 150 mm.

4. Pale d'éolienne selon l'une quelconque des revendications 1 à 3, dans laquelle ledit matériau d'absorption d'ondes radioélectriques (80) est agencé sous la forme d'un panneau comportant une ou plusieurs feuilles (82) d'un ou de plusieurs matériaux d'absorption radio, par exemple
dans laquelle lesdites une ou plusieurs feuilles (82) comportent de la mousse polymère,
éventuellement dans laquelle ladite mousse polymère est sélectionnée dans le groupe constitué par du PUR, du PS, du PP, du PE, du PVC et des combinaisons de ceux-ci.

5. Pale d'éolienne selon la revendication 4, dans laquelle ledit panneau comporte un matériau extérieur (84), encapsulant partiellement ou entièrement lesdites feuilles (82) d'un ou de plusieurs matériaux d'absorption radio, ledit matériau extérieur étant sélectionné dans le groupe constitué par du PTFE, du PP, du PE, du PC, du PS, de l'ABS, du PBT, du caoutchouc naturel, du caoutchouc synthétique et des combinaisons de ceux-ci.

6. Pale d'éolienne selon l'une quelconque des revendications 1 à 5, dans laquelle ledit matériau d'absorption d'ondes radioélectriques (80) comporte du carbone.

7. Pale d'éolienne selon l'une quelconque des revendications 1 à 4, dans laquelle ledit matériau d'absorption d'ondes radioélectriques est agencé sous la forme d'un dispositif passif comportant des plaques métalliques espacées entre elles (200), par exemple
dans laquelle lesdites plaques métalliques espacées entre elles sont des plaques de cuivre.

8. Pale d'éolienne selon la revendication 7, dans laquelle la distance entre lesdites plaques métalliques espacées entre elles se trouve dans la plage allant de 1 à 10 cm, de préférence de 2 à 8 cm, comme de 3 à 5 cm, et/ou
dans laquelle le nombre desdites plaques métalliques espacées entre elles est entre 2 et 20, comme entre 5 et 15.

9. Pale d'éolienne selon l'une quelconque des revendications 1 à 8,
dans laquelle ledit au moins un dispositif de communication de bout (72) comporte une antenne émettant une impulsion étroite à dimension temporelle en provenance d'un générateur d'impulsions, et ledit au moins un dispositif de communication de pied (70) comporte une antenne recevant ladite impulsion étroite à dimension temporelle.

10. Pale d'éolienne (10) selon l'une quelconque des revendications 1 à 9,
dans laquelle ledit au moins un dispositif de communication de bout (72) est situé entre 0,5 et 5 m par rapport à l'extrémité de bout du corps de profil aérodynamique, de préférence entre 2 à 4 m par rapport à l'extrémité de bout du corps de profil aérodynamique.

11. Pale d'éolienne (10) selon l'une quelconque des revendications 1 à 10,
dans laquelle ledit au moins un dispositif de communication de pied (70) est agencé de manière externe sur le corps de profil aérodynamique.

12. Éolienne (2) ayant au moins une pale d'éolienne (10) selon l'une quelconque des revendications 1 à 11.

13. Éolienne (2) selon la revendication 12, comportant par ailleurs un système de commande de pas servant à ajuster le pas d'au moins une pale d'éolienne de ladite éolienne, dans laquelle l'entrée dans ledit système de commande de pas est basée au moins partiellement sur le mouvement déterminé dudit au moins un dispositif de communication de bout (72) par rapport audit au moins un dispositif de communication de pied (70) indiquant une déviation de pale.

14. Système de surveillance de déviation de pale à des fins d'installation sur une pale d'éolienne, la pale d'éolienne comportant un corps de profil aérodynamique ayant un côté en pression (52) et un côté en dépression (54), et un bord d'attaque (18) et un bord de fuite (20) avec une longueur de corde (60) s'étendant entre eux, la pale ayant une extrémité de bout (14) et une extrémité de pied (16), le système de surveillance comportant :
au moins un dispositif de communication de bout (72) à des fins d'installation vers l'extrémité de bout d'une pale d'éolienne (10),
au moins un dispositif de communication de pied (70) à des fins d'installation vers l'extrémité de pied d'une pale d'éolienne, et
un dispositif de commande pour faire fonctionner lesdits dispositifs de communication en radiocommunication sans fil pour surveiller la distance entre ledit au moins un dispositif de communication de bout et ledit au moins un dispositif de communication de pied quand ils sont installés sur une pale d'éolienne pour déterminer un mouvement dudit au moins un dispositif de communication de bout par rapport audit au moins un dispositif de communication de pied indiquant une déviation de pale, dans lequel
ledit au moins un dispositif de communication de bout est mis en œuvre de manière interne dans le corps de profil aérodynamique, et
dans lequel au moins un matériau d'absorption d'ondes radioélectriques (80) est agencé de manière interne dans le corps de profil aérodynamique et dans ladite voie de communication sans fil,
**caractérisé en ce que** ledit matériau d'absorption d'ondes radioélectriques (80) est agencé entre ledit au moins un dispositif de communication de bout (72) et ledit au moins un dispositif de communication de pied (70) à une distance par rapport au dispositif de communication de bout d'entre 0,2 à 3,0 m, de préférence d'entre 0,5 à 2 m.
